# EUROPÄISCHE PATENTSCHRIFT

(11) **EP 3 618 016 B1**
(45) Veröffentlichungstag und Bekanntmachung des Hinweises auf die Patenterteilung: **26.10.2022**
(21) Anmeldenummer: 19192504.9
(22) Anmeldetag: 20.08.2019
(51) Int. Cl.: G07C 9/00, G06V 10/14, G07C 9/37, G06V 10/56, G06K 9/00

(54) **ZUGANGSKONTROLLSYSTEM ZUM ERFASSEN EINES GESICHTSBILDES EINER PERSON**
ACCESS CONTROL SYSTEM FOR DETECTING A FACE IMAGE OF A PERSON
SYSTÈME DE CONTRÔLE D'ACCÈS PERMETTANT DE DÉTECTER UNE IMAGE DE VISAGE D'UNE PERSONNE

(30) Priorität: 30.08.2018 DE 102018121254
(43) Veröffentlichungstag der Anmeldung: 04.03.2020
(73) Patentinhaber: Bundesdruckerei GmbH, 10969 Berlin (DE)
(72) Erfinder: HERRMANN, Klaus, 30625 Hannover (DE); HESSE, Holger, 30655 Hannover (DE); MAGGIONI, Christoph, 10961 Berlin (DE); RABELER, Uwe, 30453 Hannover (DE); THATER, Marcel, 30952 Ronnenberg (DE); WOLF, Andreas, 13158 Berlin (DE)
(74) Vertreter: Patentship Patentanwaltsgesellschaft mbH

(56) Entgegenhaltungen:
- WO-A1-2005/119601
- DE-A1-102011 079 285
- DE-A1-102014 112 494
- DE-A1-102016 125 356
- DE-T2- 60 119 418
- DE-T2- 60 133 788
- US-A1- 2018 211 461

## Beschreibung

Die vorliegende Erfindung betrifft das Gebiet der Gesichtsbilderfassung einer Person innerhalb eines Zugangsbereichs, beispielsweise an einem Grenzkontrollpunkt.

Die Offenlegungsschrift WO 2005/119601 A1 offenbart eine Vorrichtung zur biometrischen Steuerung von Anlagen.

Die Übersetzung DE 601 19 418 T2 der europäischen Patentschrift EP 11 36 937 B1 offenbart ein Gesichtsbild aufnehmendes Erkennungsgerät.

Die Offenlegungsschrift US 2018/211461 A1 offenbart ein Zugangskontrollsystem.

Die Übersetzung DE 601 33 788 T2 der europäischen Patentschrift EP 11 34 691 B1 offenbart eine Bildverarbeitungsvorrichtung.

Die Offenlegungsschrift (DE 10 2014 112 494 A1 offenbart eine Vorrichtung zur Erfassung biometrischer Merkmale eines Gesichts einer Person.

Die Offenlegungsschrift DE 10 2011 079 285 A1 offenbart eine Vorrichtung zur Erfassung biometrischer Merkmale.

Die Offenlegungsschrift DE 10 2006 125 356 A1 offenbart eine Vorrichtung zum Reduzieren eines Farbstichs eines Gesichtsbildes.

Bei bekannten Zutrittskontrollsystemen, beispielsweise Automated Border Control (ABC) Gates an Grenzkontrollpunkten, ergibt sich häufig die Aufgabe, Gesichtsbilder von Personen zu erfassen. Die Erfassung der Gesichtsbilder der Personen soll üblicherweise schnell erfolgen, sowie bequem und intuitiv für die Personen sein. Zudem sollen die Gesichtsbilder der Personen eine ausreichende Qualität aufweisen.

Bestimmte Standards für die Erfassung von Gesichtsbildern, beispielsweise die Standards ISO/IEC 19794-5, ISO/IEC 39794-5 und ICAO Portrait Quality TR, sehen insbesondere vor, dass derartige Gesichtsbilder in frontaler Pose aufgenommen werden sollen. Üblicherweise geschieht dies in einer Anordnung, bei der sich die Gesichter der Personen und der Bildsensor in derselben horizontalen Ebene befinden.

Nicht selten befinden sich derartige Zugangskontrollsysteme jedoch unmittelbar hinter Duty-Free-Shops bzw. hinter bunten Werbetafeln, welche sich im Blickfeld des zur Erfassung der Gesichtsbilder verwendeten Bildsensors befinden. Eine Änderung dieser Erfassungsbedingungen ist außerordentlich schwierig realisierbar; insbesondere bei Flughäfen, welche ohnehin häufig unter Platzmangel leiden.

In Abhängigkeit von der Platzierung derartiger Zugangskontrollsysteme ist folglich mit einer reduzierten Qualität der erfassten Gesichtsbilder zu rechnen. In bestimmten Fällen kann die Qualität der erfassten Gesichtsbilder derart beeinträchtigt sein, dass eine Identifizierung der jeweiligen Personen mittels der Gesichtsbilder, und gegebenenfalls mittels eines entsprechenden Datenbankabgleichs, nicht mehr durchgeführt werden kann.

Eine nachträgliche Freistellung der Köpfe bzw. Gesichter der Personen wird gegenwärtig durch die ICAO nicht empfohlen. Das Anbringen von Bildhintergründen unmittelbar hinter den Personen scheitert praktisch zumeist an mangelndem Platz. Zudem wäre eine separate Rückwand zumeist physisch im Weg.

Es ist daher eine Aufgabe der vorliegenden Erfindung, ein effizientes Konzept zum Erfassen eines Gesichtsbildes einer Person innerhalb eines Zugangsbereichs zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe dadurch gelöst werden kann, dass die Erfassung des Gesichtsbildes der Person nicht in einer horizontalen Blickrichtung der Person erfolgt, sondern bei einer nach unten geneigten Blickrichtung der Person. Der Zugangsbereich ist dabei durch ein Deckenelement begrenzt, welches als Bildhintergrund für die Bilderfassung dient und vorbestimmte Eigenschaften aufweist. Das Deckenelement kann beispielsweise durch eine Pergola oder durch ein Deckensegel gebildet sein. Ferner kann das Deckenelement einen zumindest abschnittsweise grauen Bildhintergrund bilden. Durch die Anordnung der optischen Achse für die Bilderfassung frontaler Gesichtsbilder aus der horizontalen Lage in eine aufwärts geneigte Lage, kann der Bildhintergrund an die Decke gebracht werden, wo er zudem nicht im Weg ist.

Zusammenfassend wird erreicht, dass störende Objekte und/oder Farben im Bildhintergrund vermieden werden können, und das Zugangskontrollsystem zugleich kompakt aufgebaut sein kann. Trotz räumlich enger Bedingungen, beispielsweise an einem Flughafen, kann das Gesichtsbild folglich mit einem homogenen Bildhintergrund erfasst werden. Infolgedessen kann die Qualität des erfassten Gesichtsbildes der Person verbessert werden, wodurch auch die Identifizierung der Person durch das Zugangskontrollsystem verbessert wird.

Gemäß einem ersten Aspekt betrifft die Erfindung ein Zugangskontrollsystem zum Erfassen eines Gesichtsbildes einer Person innerhalb eines Zugangsbereichs, welcher durch ein Deckenelement begrenzt ist. Das Zugangskontrollsystem umfasst einen Bildsensor, welcher ausgebildet ist, das Gesichtsbild der Person entlang einer optischen Achse zu erfassen, wobei der Bildsensor zum Deckenelement derart ausgerichtet ist, dass die optische Achse des Bildsensors und eine durch das Deckenelement verlaufende lotrechte Achse des Deckenelements einen Winkel einschließen, welcher kleiner als 90° ist.

Gemäß einer Ausführungsform umfasst das Zugangskontrollsystem das Deckenelement. Dadurch wird der Vorteil erreicht, dass das Zugangskontrollsystem einfach realisiert werden kann. Beispielsweise kann die Anordnung des Bildsensors relativ zu dem Deckenelement in dem Zugangskontrollsystem vorbestimmt sein.

Gemäß einer Ausführungsform ist der Bildsensor ausgerichtet, das Gesichtsbild der Person mit einem durch das Deckenelement gebildeten Bildhintergrund zu erfassen. Dadurch wird der Vorteil erreicht, dass das Deckenelement den Bildhintergrund des Gesichtsbildes bildet.

Gemäß einer Ausführungsform ist der Bildsensor ausgerichtet, mit dem Gesichtsbild der Person zumindest einen Abschnitt des Deckenelementes zu erfassen. Dadurch wird der Vorteil erreicht, dass zumindest der Abschnitt des Deckenelementes einen Teil des Bildhintergrundes des Gesichtsbildes bildet.

Gemäß einer Ausführungsform ist der Bildsensor unterhalb eines Gesichtsbereichs der Person angeordnet oder anordenbar, wobei der Bildsensor ausgebildet ist, den Gesichtsbereich der Person zu erfassen. Dadurch wird der Vorteil erreicht, dass die optische Achse des Bildsensors und die lotrechte Achse des Deckenelementes zur Erfassung des Gesichtsbildes einfach zueinander angeordnet werden können.

Zur entsprechenden Anordnung des Bildsensors kann eine typische Körpergröße von Personen und eine typische Höhe des Gesichtsbereiches relativ zum Boden angenommen werden, beispielsweise 150cm, 160 cm, 170 cm, 180 cm, 190 cm, oder 200 cm.

Gemäß einer Ausführungsform ist das Deckenelement als Bildhintergrund für die Erfassung des Gesichtsbildes der Person ausgebildet. Dadurch wird der Vorteil erreicht, dass das Deckenelement den Bildhintergrund des Gesichtsbildes bildet.

Gemäß einer Ausführungsform ist das Deckenelement durch eine Pergola oder durch ein Deckensegel gebildet. Dadurch wird der Vorteil erreicht, dass das Deckenelement einfach realisiert werden kann.

Gemäß einer Ausführungsform bildet das Deckenelement einen zumindest abschnittsweise grauen Bildhintergrund, insbesondere einen grauen Bildhintergrund mit einem 18% Grauanteil. Dadurch wird der Vorteil erreicht, dass das Deckenelement von dem Gesicht der Person in dem Gesichtsbild einfach zu unterscheiden ist.

Gemäß einer Ausführungsform ist das Deckenelement waagerecht oder geneigt angeordnet, insbesondere gegenüber einem Boden des Zugangsbereichs. Dadurch wird der Vorteil erreicht, dass der Zugangsbereich kompakter realisiert werden kann.

Gemäß einer Ausführungsform ist der Bildsensor eine digitale Bildkamera. Dadurch wird der Vorteil erreicht, dass der Bildsensor besonders einfach realisiert werden kann.

Gemäß einer Ausführungsform umfasst das Zugangskontrollsystem eine Beleuchtungseinrichtung, welche ausgebildet ist, einen Gesichtsbereich der Person und das Deckenelement mit Licht derselben Lichtfarbe oder mit demselben Licht zu beleuchten. Dadurch wird der Vorteil erreicht, dass das Deckenelement und der Gesichtsbereich in dem Gesichtsbild gleichermaßen durch das Licht verändert werden. Insbesondere können vorbestimmte Eigenschaften des Deckenelementes zur nachträglichen Korrektur des Gesichtsbildes herangezogen werden.

Gemäß einer Ausführungsform umfasst das Deckenelement einen Referenzfarbstreifen mit einem Referenzfarbfeld, wobei das Referenzfarbfeld eine vorbestimmte Referenzfarbe aufweist, wobei der Referenzfarbstreifen in dem Gesichtsbild der Person sichtbar ist. Das Zugangskontrollsystem umfasst eine Farbkorrektureinrichtung, welche ausgebildet ist, den Referenzfarbstreifen in dem Gesichtsbild der Person zu erfassen, das Referenzfarbfeld in dem erfassten Referenzfarbstreifen zu erfassen, eine Farbe aus dem erfassten Referenzfarbfeld zu extrahieren, die extrahierte Farbe mit der vorbestimmten Referenzfarbe zu vergleichen, um eine Farbabweichung zu erhalten, und eine Farbkorrektur des Gesichtsbildes auf der Basis der Farbabweichung durchzuführen. Dadurch wird der Vorteil erreicht, dass ein Farbstich des Gesichtsbildes effizient reduziert werden kann.

Die Farbkorrektur kann beispielsweise gemäß dem Verfahren erfolgen, welches in der deutschen Patentanmeldung DE 10 2016 125 356 A1 detaillierter beschrieben ist.

Gemäß einer Ausführungsform umfasst das Zugangskontrollsystem eine Auslöseeinrichtung, welche ausgebildet ist, eine Blickrichtung der Person zu erkennen, insbesondere auf der Basis einer Mustererkennung, und eine Bilderfassung durch den Bildsensor auszulösen, wenn die Blickrichtung der Person zur optischen Achse hin gewandt ist. Dadurch wird der Vorteil erreicht, dass das Gesichtsbild der Person in frontaler Pose einfach erfasst werden kann.

Gemäß einer Ausführungsform umfasst das Zugangskontrollsystem eine Identifizierungseinrichtung, welche ausgebildet ist, das Gesichtsbild der Person mit einem Referenzgesichtsbild der Person zu vergleichen, um die Person zu identifizieren. Dadurch wird der Vorteil erreicht, dass eine effiziente Identifizierung der Person erfolgen kann.

Gemäß einem zweiten Aspekt betrifft die Erfindung ein Zugangskontrollverfahren zum Erfassen eines Gesichtsbildes einer Person innerhalb eines Zugangsbereichs, welcher durch ein Deckenelement begrenzt ist. Das Zugangskontrollverfahren umfasst ein Erfassen des Gesichtsbildes der Person entlang einer optischen Achse durch einen Bildsensor, wobei die optische Achse des Bildsensors und eine durch das Deckenelement verlaufende lotrechte Achse des Deckenelements einen Winkel einschließen, welcher kleiner als 90° ist.

Das Zugangskontrollverfahren kann durch das Zugangskontrollsystem ausgeführt werden. Weitere Merkmale des Zugangskontrollverfahrens resultieren unmittelbar aus den Merkmalen und/oder der Funktionalität des Zugangskontrollsystems.

Gemäß einem dritten Aspekt betrifft die Erfindung ein Computerprogramm mit einem Programmcode zum Ausführen des Zugangskontrollverfahrens. Das Zugangskontrollsystem kann programmtechnisch eingerichtet sein, um den Programmcode auszuführen.

Weitere Ausführungsbeispiele werden Bezug nehmend auf die beiliegenden Zeichnungen näher erläutert. Es zeigen:
- Fig. 1: ein schematisches Diagramm eines Zugangskontrollsystems zum Erfassen eines Gesichtsbildes einer Person innerhalb eines Zugangsbereichs; und
- Fig. 2: ein schematisches Diagramm eines Zugangskontrollverfahrens zum Erfassen eines Gesichtsbildes einer Person innerhalb eines Zugangsbereichs.

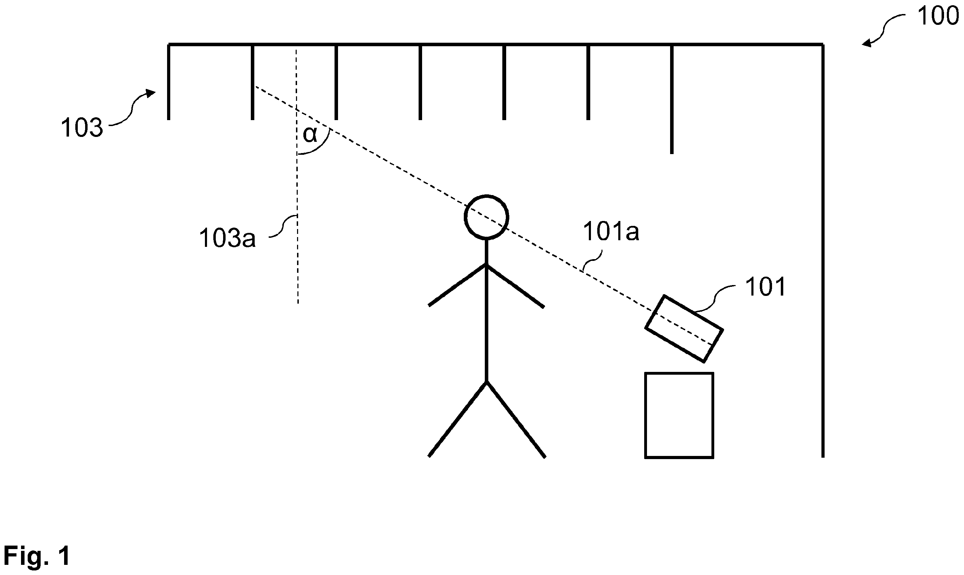

Fig. 1 zeigt ein schematisches Diagramm eines Zugangskontrollsystems 100 zum Erfassen eines Gesichtsbildes einer Person innerhalb eines Zugangsbereichs, welcher durch ein Deckenelement 103 begrenzt ist.

Das Zugangskontrollsystem 100 umfasst einen Bildsensor 101, welcher ausgebildet ist, das Gesichtsbild der Person entlang einer optischen Achse 101a zu erfassen, wobei der Bildsensor 101 zum Deckenelement 103 derart ausgerichtet ist, dass die optische Achse 101a des Bildsensors 101 und eine durch das Deckenelement 103 verlaufende lotrechte Achse 103a des Deckenelements 103 einen Winkel α einschließen, welcher kleiner als 90° ist. Der eingeschlossene Winkel α kann beispielsweise 0°, 5°, 10°, 15°, 20°, 25°, 30°, 35°, 40°, 45°, 50°, 55°, 60°, 65°, 70°, 75°, 80°, oder 85° betragen.

Durch eine Neigung des Kopfes der Person, beispielsweise leicht nach unten, kann der Bildsensor 101 das Gesichtsbild der Person folglich in frontaler Pose erfassen. Der Kopf der Person kann frontal zum Bildsensor 101 ausgerichtet sein. Da der Kopf der Person typischerweise nach unten geneigt sein kann, ist der Bildsensor 101 entsprechend typischerweise nach oben geneigt. Dadurch kann der Hintergrund hinter dem Gesicht der Person nach oben bewegt werden, und ist nicht im Weg. Zur automatisierten Erfassung des Gesichtsbildes kann beispielsweise eine Auslöseeinrichtung vorgesehen sein, welche ausgebildet ist, eine Blickrichtung der Person zu erkennen, beispielsweise auf der Basis einer Mustererkennung, und die Bilderfassung durch den Bildsensor 101 auszulösen, wenn die Blickrichtung der Person zur optischen Achse 101a hin gewandt ist.

Eine frontale Pose bei der Erfassung des Gesichtsbildes kann somit auch bei geneigtem Kopf der Person erreicht werden. Der Bildhintergrund wird folglich durch das Deckenelement 103 gebildet. Gegebenenfalls ist bereits die vorhandene Decke des Zugangsbereichs als Deckenelement 103 geeignet. Dies kann beispielsweise davon abhängen, ob eventuelle störende Beleuchtungen, die häufig an Decken angebracht sind, vorhanden sind. In höheren Zugangsbereichen, wie sie beispielsweise an Grenzkontrollpunkten bei Flughäfen verwendet werden, könnten die vorhandenen Decken möglicherweise nicht homogen genug sein.

Als Deckenelement 103 kann beispielsweise oberhalb der Person eine Pergola verwendet werden, welche im Sichtbereich des Bildsensors 101 angeordnet ist. Die dem Bildsensor 101 zugewandte Seite der Pergola kann farblich homogen gestaltet sein, und beispielsweise einen grauen Bildhintergrund mit einem 18% Grauanteil bilden. Andere Farben sind ebenfalls geeignet, wobei diese jedoch üblicherweise nicht in Gesichtern von Personen vorkommen sollten, wodurch ein guter Kontrast zwischen den Gesichtern und dem Hintergrund gewährleisten werden kann. Eine Außenseite der Pergola kann bei Bedarf beispielsweise als Webeträger genutzt werden. Die Orientierung der Pergola bzw. von Elementen der Pergola, beispielsweise waagrecht, geneigt oder senkrecht, kann geeignet gewählt werden.

Anstelle einer Pergola kann beispielsweise ein Deckensegel als Deckenelement 103 verwendet werden, welches beispielsweise an geeigneter Stelle waagerecht aufgespannt werden kann. Das Deckensegel kann lichtdicht oder teilweise transparent ausgelegt sein. Das Deckensegel kann beispielsweise ein Sonnensegel sein oder als Sonnensegel dienen.

Das Deckenelement 103, insbesondere die Pergola oder das Deckensegel, kann verstellbar sein. Damit kann beispielsweise flexibel auf geänderte Umgebungslichtbedingungen etwa abhängig vom Sonnenstand reagiert werden.

Eine Farbkorrektur des erfassten Gesichtsbildes kann beispielsweise gemäß dem Verfahren erfolgen, welches in der deutschen Patentanmeldung DE 10 2016 125 356 A1 detaillierter beschrieben ist. Das Deckenelement 103, insbesondere die Pergola oder das Deckensegel, kann hierfür einen Referenzfarbstreifen mit einem Referenzfarbfeld umfassen, wobei das Referenzfarbfeld eine vorbestimmte Referenzfarbe aufweist. Das Zugangskontrollsystem 100 kann folglich eine Farbkorrektureinrichtung umfassen, welche ausgebildet ist, den Referenzfarbstreifen in dem Gesichtsbild der Person zu erfassen, das Referenzfarbfeld in dem erfassten Referenzfarbstreifen zu erfassen, eine Farbe aus dem erfassten Referenzfarbfeld zu extrahieren, die extrahierte Farbe mit der vorbestimmten Referenzfarbe zu vergleichen, um eine Farbabweichung zu erhalten, und eine Farbkorrektur des Gesichtsbildes auf der Basis der Farbabweichung durchzuführen. Das Zugangskontrollsystem 100 kann insbesondere eine Beleuchtungseinrichtung umfassen, welche ausgebildet ist, einen Gesichtsbereich der Person und das Deckenelement 103 mit Licht derselben Lichtfarbe oder mit demselben Licht zu beleuchten.

Das Deckenelement 103, insbesondere die Pergola oder das Deckensegel, kann zudem einen Abschattungseffekt an der Stelle bewirken, an welcher das Gesichtsbild der Person erfasst wird. Damit kann das Deckenelement 103 sowohl für einen homogenen Bildhintergrund sorgen, als auch potenziell störendes Umgebungslicht, wie etwa durch Sonnenschein, Hallenbeleuchtungen oder Spots an der Decke, hinsichtlich seiner unerwünschten Wirkung mindern.

In einem exemplarischen Szenario fertigt ein Grenzbeamter die Person in einem Flughafen an einem Grenzkontrollpunkt ab. An der Decke wird auf dessen Vorderseite ein Deckenelement 103 angebracht, welches weit genug nach vorne reicht, so dass der das Gesicht von unten erfassende Bildsensor 101 im Hintergrund das Deckenelement 103 mit erfasst. Das Deckenelement 103 kann so groß gewählt sein, dass es bei Personen verschiedener sinnvoller Körpergröße hinter dem Gesicht der Personen angeordnet ist.

Zusammenfassend kann ein weitgehend homogener Bildhintergrund realisiert werden, welcher physisch keine beteiligte Person stört. Ferner kann eine homogenere Beleuchtung erreicht werden. Außerdem sind zusätzliche Farbkorrekturen in den Gesichtsbildern durch den definierten Bildhintergrund möglich.

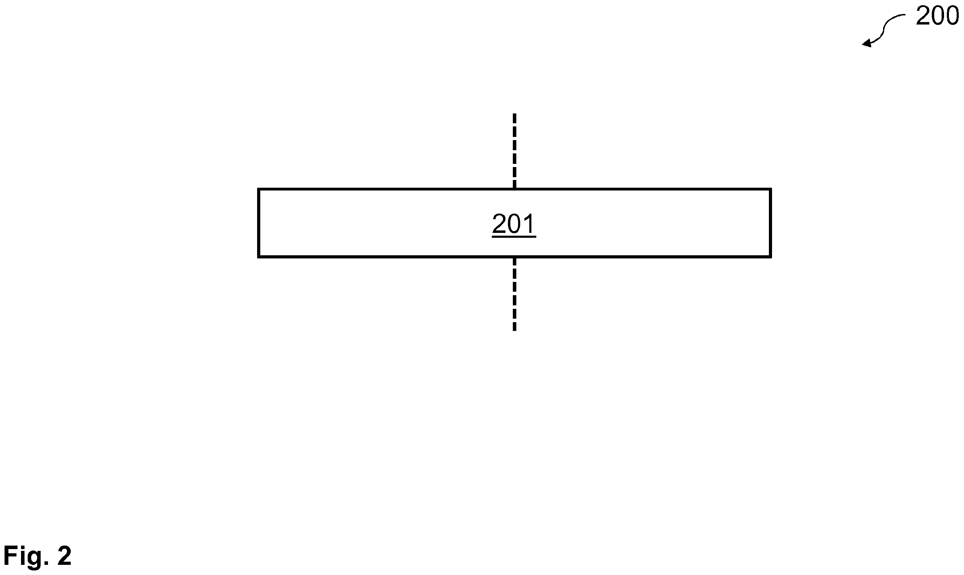

Fig. 2 zeigt ein schematisches Diagramm eines Zugangskontrollverfahrens 200 zum Erfassen eines Gesichtsbildes einer Person innerhalb eines Zugangsbereichs, welcher durch ein Deckenelement begrenzt ist.

Das Zugangskontrollverfahren 200 umfasst ein Erfassen 201 des Gesichtsbildes der Person entlang einer optischen Achse durch einen Bildsensor, wobei die optische Achse des Bildsensors und eine durch das Deckenelement verlaufende lotrechte Achse des Deckenelements einen Winkel einschließen, welcher kleiner als 90° ist.

Das Zugangskontrollverfahren 200 kann mittels eines Computerprogramms mit einem Programmcode ausgeführt werden.

Alle in Verbindung mit einzelnen Ausführungsformen gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Zugangskontrollsystem
- 101: Bildsensor
- 101a: Optische Achse
- 103: Deckenelement
- 103a: Lotrechte Achse

- α: Winkel

- 200: Zugangskontrollverfahren
- 201: Erfassen

## Patentansprüche

1. Zugangskontrollsystem (100) zum Erfassen eines Gesichtsbildes einer Person innerhalb eines Zugangsbereichs, welcher durch ein Deckenelement (103) begrenzt ist, mit:
einem Bildsensor (101), welcher ausgebildet ist, das Gesichtsbild der Person entlang einer optischen Achse (101a) zu erfassen, wobei der Bildsensor (101) zum Deckenelement (103) derart ausgerichtet ist, dass die optische Achse (101a) des Bildsensors (101) und eine durch das Deckenelement (103) verlaufende lotrechte Achse (103a) des Deckenelements (103) einen Winkel (α) einschließen, welcher kleiner als 90° ist, und
einer Identifizierungseinrichtung, welche ausgebildet ist, das Gesichtsbild der Person mit einem Referenzgesichtsbild der Person zu vergleichen, um die Person zu identifizieren,
wobei der Bildsensor (101) unterhalb eines Gesichtsbereichs der Person angeordnet ist, und wobei der Bildsensor (101) ausgebildet ist, den Gesichtsbereich der Person zu erfassen, **dadurch gekennzeichnet, dass**
das Zugangskontrollsystem (100) das Deckenelement (103) umfasst,
wobei das Deckenelement (103) vorbestimmte Eigenschaften aufweist,
wobei der Bildsensor (101) ausgerichtet ist, mit dem Gesichtsbild der Person zumindest einen Abschnitt des Deckenelementes (103) zu erfassen,
wobei das Deckenelement (103) als Bildhintergrund für die Erfassung des Gesichtsbildes der Person ausgebildet ist, so dass das Deckenelement (103) als Bildhintergrund für die Bilderfassung dient.

2. Zugangskontrollsystem (100) nach Anspruch 1, wobei das Deckenelement (103) durch eine Pergola oder durch ein Deckensegel gebildet ist.

3. Zugangskontrollsystem (100) nach einem der vorstehenden Ansprüche, wobei das Deckenelement (103) einen zumindest abschnittsweise grauen Bildhintergrund, insbesondere einen grauen Bildhintergrund mit einem 18% Grauanteil, bildet.

4. Zugangskontrollsystem (100) nach einem der vorstehenden Ansprüche, wobei das Deckenelement (103) gegenüber einem Boden des Zugangsbereichs waagerecht oder geneigt angeordnet ist.

5. Zugangskontrollsystem (100) nach einem der vorstehenden Ansprüche, wobei der Bildsensor (101) eine digitale Bildkamera ist.

6. Zugangskontrollsystem (100) nach einem der vorstehenden Ansprüche, mit:
einer Beleuchtungseinrichtung, welche ausgebildet ist, einen Gesichtsbereich der Person und das Deckenelement (103) mit Licht derselben Lichtfarbe oder mit demselben Licht zu beleuchten.

7. Zugangskontrollsystem (100) nach einem der vorstehenden Ansprüche, wobei das Deckenelement (100) einen Referenzfarbstreifen mit einem Referenzfarbfeld umfasst, wobei das Referenzfarbfeld eine vorbestimmte Referenzfarbe aufweist, wobei der Referenzfarbstreifen in dem Gesichtsbild der Person sichtbar ist, mit:
einer Farbkorrektureinrichtung, welche ausgebildet ist, den Referenzfarbstreifen in dem Gesichtsbild der Person zu erfassen, das Referenzfarbfeld in dem erfassten Referenzfarbstreifen zu erfassen, eine Farbe aus dem erfassten Referenzfarbfeld zu extrahieren, die extrahierte Farbe mit der vorbestimmten Referenzfarbe zu vergleichen, um eine Farbabweichung zu erhalten, und eine Farbkorrektur des Gesichtsbildes auf der Basis der Farbabweichung durchzuführen.

8. Zugangskontrollsystem (100) nach einem der vorstehenden Ansprüche, mit:
einer Auslöseeinrichtung, welche ausgebildet ist, eine Blickrichtung der Person zu erkennen, insbesondere auf der Basis einer Mustererkennung, und eine Bilderfassung durch den Bildsensor (101) auszulösen, wenn die Blickrichtung der Person zur optischen Achse (101a) hin gewandt ist.

9. Zugangskontrollverfahren (200) zum Erfassen eines Gesichtsbildes einer Person innerhalb eines Zugangsbereichs, welcher durch ein Deckenelement (103) begrenzt ist, wobei das Zugangskontrollverfahren (200) durch das Zugangskontrollsystem (100) nach einem der vorstehenden Ansprüche ausgeführt wird, mit:
Erfassen (201) des Gesichtsbildes der Person entlang der optischen Achse (101a) durch den Bildsensor (101),
Vergleichen des Gesichtsbilds der Person mit einem Referenzgesichtsbild der Person durch die Identifizierungseinrichtung, um die Person zu identifizieren.

10. Computerprogramm mit einem Programmcode zum Ausführen des Zugangskontrollverfahrens (200) nach Anspruch 9, wobei das Zugangskontrollsystem (100) programmtechnisch eingerichtet ist, den Programmcode auszuführen.

## Claims

1. An access control system (100) for capturing a facial image of a person within an access area, which is delimited by a ceiling element (103), comprising:
an image sensor (101), which is configured to capture the facial image of the person along an optical axis (101a), wherein the image sensor (101) is aligned to the ceiling element (103) such, that the optical axis (101a) of the image sensor (101) and a perpendicular axis (103a) of the ceiling element (103) running through the ceiling element (103) enclose an angle (α), which is less than 90°, and
an identification device, which is configured to compare the facial image of the person with a reference facial image of the person in order to identify the person,
wherein the image sensor (101) is arranged below a facial area of the person, and wherein the image sensor (101) is configured to capture the facial area of the person, **characterized in that**
the access control system (100) comprises the ceiling element (103),
wherein the ceiling element (103) has predetermined properties,
wherein the image sensor (101) is aligned to capture with the facial image of the person at least a section of the ceiling element (103),
wherein the ceiling element (103) is formed as an image background for the capturing of the facial image of the person, so that the ceiling element (103) serves as an image background for the image capturing.

2. The access control system (100) according to claim 1, wherein the ceiling element (103) is formed by a pergola or by a ceiling sail.

3. The access control system (100) according to one of the preceding claims, wherein the ceiling element (103) forms an at least partially gray image background, in particular a gray image background with an 18% gray component.

4. The access control system (100) according to one of the preceding claims, wherein the ceiling element (103) is arranged horizontally or inclined relative to a floor of the access area.

5. The access control system (100) according to one of the preceding claims, wherein the image sensor (101) is a digital image camera.

6. The access control system (100) according to one of the preceding claims, comprising:
an illumination device, which is configured to illuminate a facial area of the person and the ceiling element (103) with light of the same light color or with the same light.

7. The access control system (100) according to one of the preceding claims, wherein the ceiling element (100) comprises a reference color stripe with a reference color field, wherein the reference color field has a predetermined reference color, wherein the reference color stripe is visible in the facial image of the person, comprising:
a color correction device, which is configured to capture the reference color stripe in the facial image of the person, to capture the reference color field in the captured reference color stripe, to extract a color from the captured reference color field, to compare the extracted color with the predetermined reference color in order to obtain a color deviation, and to perform a color correction of the facial image based on the color deviation.

8. The access control system (100) according to one of the preceding claims, comprising:
a triggering device, which is configured to detect a viewing direction of the person, in particular on the basis of a pattern detection, and to trigger an image capturing by the image sensor (101) when the viewing direction of the person is directed towards the optical axis (101a).

9. An access control method (200) for capturing a facial image of a person within an access area, which is delimited by a ceiling element (103), wherein the access control method (200) is performed by the access control system (100) according to one of the preceding claims, comprising:
capturing (201) the facial image of the person along the optical axis (101a) by the image sensor (101),
comparing the facial image of the person with a reference facial image of the person by the identification device in order to identify the person.

10. A computer program comprising a program code for executing the access control method (200) according to claim 9, wherein the access control system (100) is program-technically configured to execute the program code.

## Revendications

1. Système de contrôle d'accès (100) destiné à capturer une photo de visage d'une personne au sein d'une zone d'accès, laquelle est délimitée par un élément de plafond (103), comprenant :
un capteur d'image (101), lequel est configuré pour capturer la photo de visage de la personne le long d'un axe optique (101a), le capteur d'image (101) étant dirigé vers l'élément de plafond (103) de telle sorte que l'axe optique (101a) du capteur d'image (101) et un axe (103a) vertical de l'élément de plafond (103), qui suit un tracé à travers l'élément de plafond (103), forment un angle (α) qui est inférieur à 90°, et
un dispositif d'identification, lequel est configuré pour comparer la photo de visage de la personne avec une photo de visage de référence de la personne afin d'identifier la personne,
le capteur d'image (101) étant disposé au-dessous d'une zone de visage de la personne et le capteur d'image (101) étant configuré pour capturer la zone de visage de la personne,
**caractérisé en ce que**
le système de contrôle d'accès (100) comporte l'élément de plafond (103) ;
l'élément de plafond (103) possédant des propriétés prédéterminées,
le capteur d'image (101) étant dirigé pour capturer au moins une portion de l'élément de plafond (103) avec la photo de visage de la personne,
l'élément de plafond (103) étant configuré en tant qu'arrière-plan pour la capture de la photo de visage de la personne, de sorte que l'élément de plafond (103) sert d'arrière-plan pour la capture de photo.

2. Système de contrôle d'accès (100) selon la revendication 1, l'élément de plafond (103) étant formé par une pergola ou par un panneau suspendu.

3. Système de contrôle d'accès (100) selon l'une des revendications précédentes, l'élément de plafond (103) formant un arrière-plan d'image gris au moins dans certaines portions, notamment un arrière-plan d'image gris avec 18 % de part de gris.

4. Système de contrôle d'accès (100) selon l'une des revendications précédentes, l'élément de plafond (103) étant disposé horizontalement ou incliné par rapport à un plancher de la zone d'accès.

5. Système de contrôle d'accès (100) selon l'une des revendications précédentes, le capteur d'image (101) étant une caméra d'imagerie numérique.

6. Système de contrôle d'accès (100) selon l'une des revendications précédentes, comprenant :
un dispositif d'éclairage, lequel est configuré pour éclairer une zone de visage de la personne et l'élément de plafond (103) avec la même couleur lumineuse ou avec la même lumière.

7. Système de contrôle d'accès (100) selon l'une des revendications précédentes, l'élément de plafond (100) comportant une bande de couleur de référence ayant un champ de couleur de référence, le champ de couleur de référence possédant une couleur de référence prédéterminée, la bande de couleur de référence étant visible dans la photo de visage de la personne, comprenant :
un dispositif de correction de couleur, lequel est configuré pour capturer la bande de couleur de référence dans la photo de visage de la personne, capturer le champ de couleur de référence dans la bande de couleur de référence capturée, extraire une couleur du champ de couleur de référence capturé, comparer la couleur extraire avec la couleur de référence prédéterminée afin d'obtenir un écart de couleur, et effectuer une correction de couleur de la photo de visage sur la base de l'écart de couleur.

8. Système de contrôle d'accès (100) selon l'une des revendications précédentes, comprenant :
un dispositif de déclenchement, lequel est configuré pour reconnaître une direction du regard de la personne, notamment sur la base d'une reconnaissance de modèle, et déclencher une capture d'image par le capteur d'image (101) lorsque la direction du regard de la personne est orientée vers l'axe optique (101a).

9. Procédé de contrôle d'accès (200) pour la capture d'une photo de visage d'une personne au sein d'une zone d'accès, laquelle est délimitée par un élément de plafond (103), le procédé de contrôle d'accès (200) étant mis en œuvre par un système de contrôle d'accès (100) selon l'une des revendications précédentes, comprenant :
capture (201) de la photo de visage de la personne le long de l'axe optique (101a) par le capteur d'image (101), comparaison de la photo de visage de la personne avec une photo de visage de référence de la personne par le dispositif d'identification, afin d'identifier la personne.

10. Programme informatique comprenant un code de programme destiné à exécuter le procédé de contrôle d'accès (200) selon la revendication 9, le système de contrôle d'accès (100) étant conçu par programmation pour exécuter le code de programme.
